# EUROPÄISCHE PATENTSCHRIFT

(11) **EP 1 418 018 B1**
(45) Veröffentlichungstag und Bekanntmachung des Hinweises auf die Patenterteilung: **03.05.2006**
(21) Anmeldenummer: 03020654.4
(22) Anmeldetag: 11.09.2003
(51) Int. Cl.: B23Q 9/00, B23Q 16/00

(54) **Führungsschiene für Handwerkzeugmaschinen mit zugeordnetem Anschlagstück**
Guide rail for hand held machine-tools and associated stop
Rail de guidage pour machines-outils à main avec butée associée

(30) Priorität: 06.11.2002 DE 10251578
(43) Veröffentlichungstag der Anmeldung: 12.05.2004
(73) Patentinhaber: Festool GmbH, 73240 Wendlingen (DE)
(72) Erfinder: Spengler, Wolfgang, 73272 Neidlingen (DE); Randecker, Andreas, Dipl.-Ing., 72661 Grafenberg (DE)
(74) Vertreter: Reimold, Otto

(56) Entgegenhaltungen:
- EP-A- 0 240 802
- US-A- 2 942 633

## Beschreibung

Die Erfindung betrifft eine Führungsschiene für Handwerkzeugmaschinen mit zugeordnetem Anschlagstück, wobei die Handwerkzeugmaschine mit einer ihre Unterseite bildenden Tragplatte und das Anschlagstück jeweils mit Führungseingriff auf der Führungsschiene anordenbar und in Längsrichtung der Führungsschiene geführt verschiebbar sind und das Anschlagstück in seiner jeweiligen Längslage an der Führungsschiene fixierbar ist und im fixierten Zustand einen in Längsrichtung wirksamen Längsanschlag für die Handwerkzeugmaschine bildet. So eine Führungsschiene ist aus US 2942633 A bekannt.

Mit Hilfe einer solchen Führungsschiene, die auf ein zu bearbeitendes Werkstück aufgelegt wird, lässt sich eine Handwerkzeugmaschine beispielsweise in Gestalt einer Handkreissäge in der Längsrichtung der Führungsschiene entsprechender Vorschubrichtung geführt über das Werkstück bewegen, so dass man einen genau linear verlaufenden Sägeschnitt erhält. Zur Begrenzung des Bewegungsweges beispielsweise der Handkreissäge kann das Anschlagstück auf der Führungsschiene angeordnet und in der gewünschten Längslage fixiert werden. Dabei kann man im Falle einer Tauchsäge durch das Anschlagstück auch den Beginn des Sägeschnitts vorgeben, da eine Tauchsäge mit hochgeschwenkter Arbeitseinheit auf die Führungsschiene aufgesetzt wird, so dass das Sägeblatt noch nicht am Werkstück angreift. Hat man die Tauchsäge auf die Führungsschiene gesetzt, kann sie bis zum zuvor in der richtigen Position fixierten Anschlagstück zurückgeschoben werden, so dass das Sägeblatt, schwenkt man die Arbeitseinheit nach unten, an der gewünschten Stelle in das Werkstück eintaucht.

Bei einer Handkreissäge rotiert das Sägeblatt so, dass die Sägezähne mit Bezug auf die Vorschubrichtung hinten nach unten hin in das Werkstück eintreten und vorne nach oben hin wieder austreten. Dies hat bei Tauchsägen, deren Arbeitseinheit mit Bezug auf die Vorschubrichtung hinten schwenkbar mit der Tragplatte verbunden ist, zur Folge, dass beim nach unten Schwenken der Arbeitseinheit, wenn das Sägeblatt in das Werkstück einzutauchen beginnt, auf die Tauchsäge hinten eine nach oben gerichtete Kraft ausgeübt wird. Diese Kraft kann so groß sein, dass sich die Tauchsäge hinten von der Führungsschiene abhebt. Dies kann für die Bedienungsperson gefährlich sein und sich ungünstig auf das Arbeitsergebnis auswirken.

Ausgehend hiervon liegt der vorliegenden Erfindung die Aufgabe zugrunde, eine Anordnung der eingangs genannten Art zu schaffen, die auch im Falle von Tauchsägen ein sicheres Sägen ohne die Gefahr eines Abhebens von der Führungsschiene beim Eintauchen in das Werkstück ermöglicht.

Diese Aufgabe wird erfindungsgemäß dadurch gelöst, dass das Anschlagstück eine im auf der Führungsschiene angeordneten Zustand oberhalb eines in Längsrichtung mindestens an einer Seite offenen Eingreifraums angeordnete Übergreifpartie und die Tragplatte der Handwerkzeugmaschine eine unterhalb der übergreifpartie in den Eingreifraum passende Untergreifpartie aufweist, wobei die Übergreifpartie und die Untergreifpartie so ausgebildet und angeordnet sind, dass die Untergreifpartie bein: Verschieben des Anschlagstücks und/oder der Handwerkzeugmaschine aufeinander zu in den Eingreifraum gelangt und die Übergreifpartie einen nach oben hin wirksamen Höhenanschlag für die Untergreifpartie bildet, und dass der Führungseingriff zwischen dem Anschlagstück und der Führungsschiene das Anschlagstück gegen ein Abheben von der Führungsschiene nach oben hin sichert.

Auf diese Weise dient das Anschlagstück nicht nur wie seither als Längsanschlag sondern auch als Höhenanschlag, mit dem sich die Tragplatte und somit die Handwerkzeugmaschine bei Beginn der Werkstückbearbeitung an der Führungsschiene halten lässt.

Die Integration des Höhenanschlags in das an sich bereits bekannte Anschlagstück ergibt eine besonders kostengünstige Lösung.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Fig. 1: eine Führungsschiene in Draufsicht in Teildarstellung, wobei auf die Führungsschiene ein Anschlagstück und eine nur schematisch angedeutete Tauchsäge aufgesetzt sind, von der die Tragplatte mit ausgezogenen Linien und die Arbeitseinheit sowie das Sägeblatt strichpunktiert angedeutet sind und das Anschlagstück und die Tauchsäge mit Längsabstand zueinander angeordnet sind,
- Fig. 2: die Anordnung nach Fig. 1, wobei das Anschlagstück und die Tauchsäge aufeinander zu geschoben sind, so dass das Anschlagstück mit seiner übergreifpartie die Untergreifpartie der Tragplatte der Tauchsäge übergreift,
- Fig. 3: die Anordnung nach Fig. 2 in Seitenansicht gemäß Pfeil III, wobei die Arbeitseinheit der Tauchsäge hochgeschwenkt ist,
- Fig. 4: die Anordnung nach Fig. 3 beim nach unten Schwenken der Arbeitseinheit zu einem Zeitpunkt, bei dem das Sägeblatt ein Stück weit in das strichpunktiert angedeutete Werkstück eintaucht,

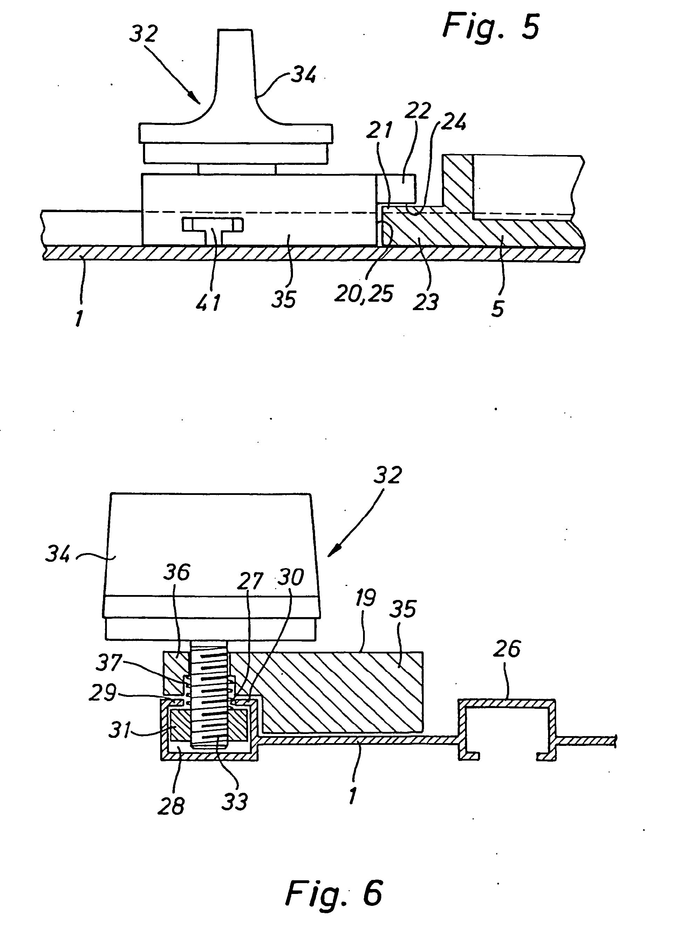

- Fig. 5: die Anordnung nach Fig. 2 im zur Zeichenebene der Fig. 3 und 4 parallelen Längsschnitt gemäß der Schnittlinie V-V, wobei von der Tauchsäge nur der hintere endseitige Bereich der Tragplatte dargestellt ist,
- Fig. 6: die Anordnung nach Fig. 2 im Querschnitt gemäß der Schnittlinie VI-VI durch das Anschlagstück, wobei die Führungsschiene abgeschnitten ist,
- Fig. 7: das Anschlagstück in gesonderter Darstellung in Schrägansicht von unten gesehen und
- Fig. 8: ein an der Tragplatte angeordnetes Steckglied zum Anstecken des Anschlagstücks bei Nichtgebrauch in Schrägansicht, wobei von der Tragplatte nur der das Anschlagstück tragende Bereich gezeigt ist.

Aus der Zeichnung geht eine Führungsschiene 1 plattenförmiger Längsgestalt hervor, die auf ein Werkstück 4 gelegt wird, das mit einer Handwerkzeugmaschine 2, beim Ausführungsbeispiel eine Tauchsäge 3, in linearer Richtung bearbeitet werden soll. Die Tauchsäge 3 weist eine ihre Unterseite bildende Tragplatte 5 auf, mit der die Tauchsäge 3 auf die Führungsschiene 1 aufgesetzt wird und dabei mit dieser in Führungseingriff gelangt, so dass die Tauchsäge 3 beim Vorschieben in Vorschubrichtung 6 linear geführt wird. Das Werkzeug der Handwerkzeugmaschine 3, beim Ausführungsbeispiel ein Kreissägeblatt 7, befindet sich bei auf der Führungsschiene 1 sitzender Handwerkzeugmaschine neben der Führungsschiene 1, so dass es an der Führungsschiene 1 vorbei am Werkstück 4 angreifen kann.

Von der Tragplatte 5 steht eine fest mit ihr verbundene Schutzhaube 9 hoch, in der das Sägeblatt 7 angeordnet ist, so dass der Benutzer nicht mit dem Sägeblatt in Berührung kommen kann. Die Schutzhaube 9 ist an ihrer Unterseite offen, so dass das Sägeblatt 7 hier aus der Schutzhaube 9 austreten und mit dem Werkstück 4 in Eingriff gebracht werden kann.

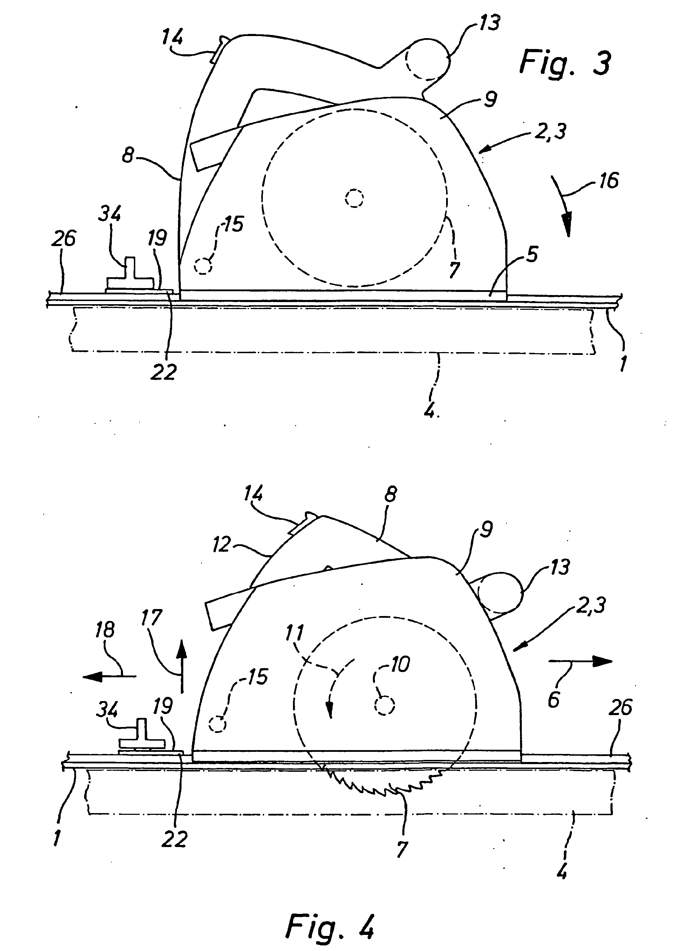

Die Handwerkzeugmaschine 2, d.h. beim Ausführungsbeispiel die Tauchsäge 3, weist ferner eine Arbeitseinheit 8 auf,die einen Antriebsmotor zum Antreiben einer Antriebswelle 10 enthält, an der das Kreissägeblatt 7 sitzt, so dass dieses in Richtung gemäß Pfeil 11 rotiert. Die Antriebseinheit 8 ist in den Figuren 3 und 4 durch die Schutzhaube 9 größtenteils verdeckt. Sichtbar ist lediglich ihre Griffanordnung mit zwei Handgriffen 12,13 und dem Ein-/Ausschalter 14, mit dem der Antriebsmotor ein- bzw. ausgeschaltet werden kann.

Bei der Tauchsäge 3 ist, wie bei Tauchsägen üblich, die Antriebseinheit 8 schwenkbar mit der Tragplatte 5 verbunden. Die zugehörige.Schwenkachse 15 befindet sich im mit Bezug auf die Vorschubrichtung 6 hinteren Bereich der Tauchsäge. In Fig. 3 ist die Arbeitseinheit 8 um die Schwenkachse 15 hochgeschwenkt, so dass das Kreissägeblatt 7 insgesamt oberhalb des Werkstücks 4 angeordnet ist.In dieser Lage wird die Tauchsäge 3 auf die Führungsschiene 1 aufgesetzt. Zum Anbringen des gewünschten Sägeschnitts am Werkstück 4 wird bei eingeschaltetem Antriebsmotor und somit bei rotierendem Kreissägeblatt 7 die Arbeitseinheit 8 um die Schwenkachse 15 in Richtung gemäß Pfeil 16 nach unten geschwenkt, so dass das Kreissägeblatt 7 zum Werkstück 4 gelangt und sich in dieses von oben her einschneidet.

Das Kreissägeblatt 7 ist in Vorschubrichtung 6 weiter vorne als die Schwenkachse 15 angeordnet. Ferner rotiert das Kreissägeblatt 7 so, dass es hinten in das Werkstück 4 eindringt und weiter vorne wieder aus dem Werkstück 4 austritt, sodass sich das Kreissägeblatt 7 - sieht man von dem Unterschied zwischen linearer und kreisförmiger Bewegung ab - in Vorschubrichtung 6 durch das Werkstück bewegt.

Dies hat zur Folge, dass beim nach unten Schwenken der Arbeitseinheit 8, wenn das Kreissägeblatt 7 auf das Werkstück 4 trifft, auf die Tauchsäge vom Werkstück 4 her eine Reaktionskraft ausgeübt wird, die sich in eine vertikale Kraftkomponente 17 und in eine horizontale Kraftkomponente 18 zerlegen lässt. Die horizontale Kraftkomponente 18 ist nach hinten, d.h. entgegen der Vorschubrichtung 6, gerichtet. Die vertikale Kraftkomponente 17 ist dagegen nach oben in Richtung von der Führungsschiene 1 weg gerichtet und wirkt sich im hinteren Bereich der Tauchsäge aus, so dass sich diese von hinten von der Führungsschiene 1 abheben will.

Die genannte Reaktionskraft, d.h. die beiden Kraftkomponenten 17,18, wird von einem Anschlagstück 19 aufgenommen und in die Führungsschiene 1 abgeleitet, so dass sie sich weder an der Bedienungsperson auswirkt noch den Sägevorgang beeinflusst.

Das Anschlagstück 19 kann mit Führungseingriff auf der Führungsschiene 1 angeordnet und in der Vorschubrichtung 6 entsprechender Längsrichtung der Führungsschiene 1 geführt verschoben und in seiner jeweiligen Längslage an der Führungsschiene 1 fixiert werden.

Das Führungsstück 19 bildet einen in Längsrichtung der Führungsschiene 1 wirksamen Längsanschlag 20 und wird im Anwendungsfall mit Bezug auf die Vorschubrichtung 6 hinter der Tauchsäge 3 an der Führungsschiene 1 an der Stelle fixiert, dass die am Längsanschlag 20 mit ihrer Tragplatte 5 zur Anlage gebrachte Tauchsäge 3 beim nach unten Schwenken den Sägeschnitt an der gewünschten Werkstückstelle beginnen lässt. Der von dem Anschlagstück 19 gebildete Längsanschlag 20 nimmt somit beim Eintauchen des Kreissägeblattes 7 in das Werkstück die nach hinten gerichtete horizontale Kraftkomponente 18 auf.

Das Anschlagstück 19 weist ferner eine im auf der Führungsschiene 1 angeordneten Zustand oberhalb eines Eingreifraums 21 angeordnete Obergreifpartie 22 auf, der eine an der Tragplatte 5 der Tauchsäge 3 angeordnete Untergreifpartie 23 zugeordnet ist. Der Eingreifraum 21 ist in Längsrichtung der Führungsschiene an der der Tragplatte 5 zugewandten Seite offen. Die Untergreifpartie 23 der Tragplatte 5 ist in Höhenrichtung unterhalb der Übergreifpartie 22 angeordnet und passt in den Eingreifraum 21. Verschiebt man also das Anschlagstück 19 und die Tauchsäge 3 relativ zueinander aufeinander zu, gelangt die Untergreifpartie 23 in den Eingreifraum 21 und wird dann von der Übergreifpartie des Anschlagstücks 19 übergriffen. Dies bedeutet, da die Übergreifpartie 22 mit ihrer Unterseite einen Höhenanschlag 24 bildet, sodass die Tragplatte 5, schlägt sie nach hinten hin am Längsanschlag 20 des zuvor fixierten Anschlagstücks 19 an, auch gegen ein Abheben nach oben gesichert ist.

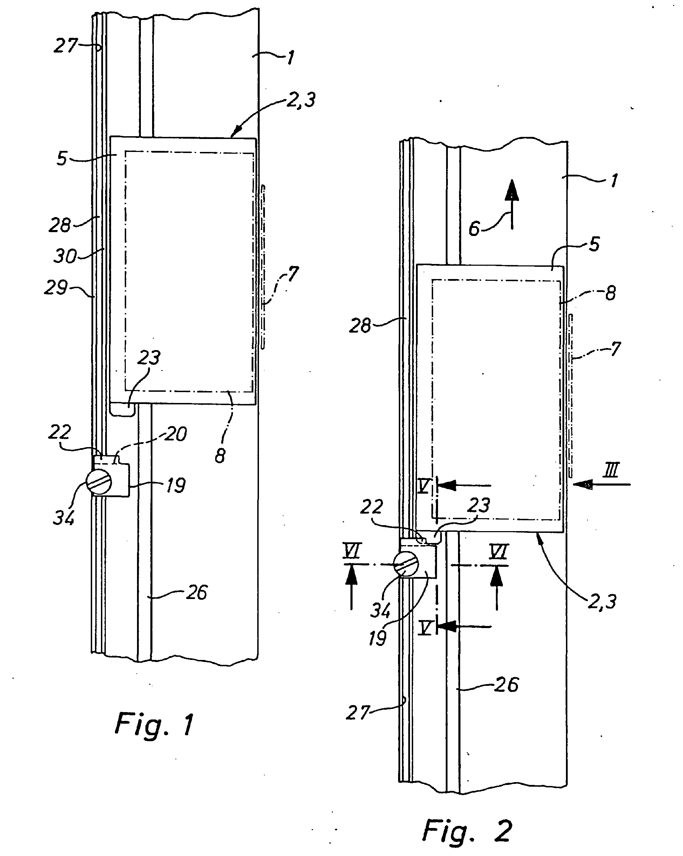

Zweckmäßigerweise ist die Übergreif partie 22, sitzt das Anschlagstück 19 auf der Führungsschiene 1, in der Projektion oberhalb der Führungsschiene 1 angeordnet, wie insbesondere aus den Figuren 1 und 2 hervorgeht. Bezüglich dieser beiden Figuren wird noch darauf hingewiesen, dass Figur 1 die Situation zeigt, in der die Tauchsäge vom Anschlagstück 19 entfernt ist, während in Fig. 2 die Tragplatte 5 der Tauchsäge am Anschlagstück 19 anschlägt und sowohl nach hinten als auch nach oben hin gesichert ist. Die Situation gemäß Figur 1 entspricht entweder dem Zeitpunkt vor Beginn des Sägevorgangs, wenn die Tauchsäge mit Abstand zum Anschlagstück auf die Führungsschiene aufgesetzt wird, oder zeigt die Tauchsäge während des Ausführens des Sägeschnitts, wenn sie vom Anschlagstück 19 weg geschoben wird.

Befindet sich die übergreifpartie 22 in der Projektion oberhalb der Führungsschiene 1, wird der Eingreifraum 28 zweckmäßigerweise von dem Zwischenraum zwischen der Führungsschiene 1 und der übergreifpartie 22 gebildet. Der Eingreifraum 21 ist ferner in Längsrichtung an der in der Gebrauchslage der Tauchsäge zugewandten Seite offen, so dass die Untergreifpartie 23 eingreifen kann. An der entgegengesetzten, der Tauchsäge abgewandten Seite, wird der Eingreifraum 21 beim zweckmäßigen Ausführungsbeispiel dagegen durch eine den Längsanschlag 20 bildende Anschlagfläche 25 begrenzt.

Die Übergreifpartie kann in verschiedener Weise am Anschlagstück angeordnet sein. Im dargestellten Falle ist sie am Anschlagstück 19 in Längsrichtung 6 vorstehend angeordnet. Dabei kann sie einstückig an das Anschlagstück 19 angeformt sein.

Die Untergreifpartie 23 ist im Bereich des Umfangs der Tragplatte 5 angeordnet. Beim Ausführungsbeispiel steht sie am Umfang der Tragplatte 5 in Längsrichtung ab.

Die Führungsschiene 1 weist eine hochstehend an ihr angeordnete und in ihrer Längsrichtung verlaufende Führungsrippe 26 auf, die zur Führung der Tauchsäge 3 dient, an deren Tragplatte 5 eine Führungsnut mit der Führungsrippe 26 entsprechendem Querschnitt angeordnet ist, in die die Führungsrippe 26 eingreift. Prinzipiell könnte man daran denken, ein entsprechend abgewandeltes Anschlagstück auf die Führungsrippe 26 aufzusetzen und an ihr festzuklemmen. Dabei würde jedoch die Gefahr bestehen, dass das Anschlagstück aufgrund der vertikalen Kraftkomponente 17 der vom Werkstück her ausgeübten Reaktionskraft von der Führungsrippe 26 nach oben hin abrutscht.

Daher ist zweckmäßigerweise vorgesehen, dass die Führungsschiene 1 zum Führen und Fixieren des Anschlagstücks 19 eine an der Oberseite durch einen Längsschlitz 27 offene Längsnut 28 aufweist. Dabei wird der Längsschlitz 27 durch aufeinander zu gerichtete Randstege 29,30 begrenzt, so dass die Längsnut 28 die Randstege 29,30 sozusagen hintergreift. Des weiteren ist am Anschlagstück 19 ein Klemmteil 31 angeordnet, das beim von einer der Stirnseiten der Führungsschiene 1 her erfolgenden Anbringen des Anschlagstücks 19 in die Längsnut 28 eingeführt wird. Das Klemmteil 31 hintergreift die Randstege 29,30 und ist mittels einer Betätigungseinrichtung 32 gegen die Randstege 29, 30 spannbar.

Bei der Betätigungseinrichtung 32 handelt es sich um einen Gewindebolzen 33, der den Längsschlitz 27 durchgreift und in das Klemmteil 31 eingeschraubt ist. Das Klemmteil 31 ist unverdrehbar in der Längsnut 28 gelagert, so dass es sich beim Verdrehen des Gewindebolzens 33 in axialer Richtung verlagert. Der Gewindebolzen 33 ist an seinem dem Klemmteil 31 entgegengesetzten Ende mit einem Drehgriff 34 fest verbunden, der außen am Anschlagstück 19 angeordnet ist, sodass er zusammen mit dem Gewindebolzen 33 vom Benutzer verdreht werden kann. Der Gewindebolzen 33 durchgreift im Bereich zwischen dem Drehgriff 34 und den Randstegen 29,30 einen Grundkörper 35 des Anschlagstücks 19, sodass die zwischen den Drehgriff 34 und die Randstege 29,30 greifende Grundkörperpartie 36 beim Verdrehen des Drehgriffs 34 in der einen Richtung zwischen dem Drehgriff 34 und den Randstegen 29,30 eingespannt und beim Verdrehen des Drehgriffs 34 in der anderen Richtung lose wird. Gleichzeitig wird das Klemmteil 31 lose, sodass das Anschlagstück 19 verschoben werden kann. Der Gewindebolzen 33 durchgreift noch eine Schraubenfeder 37, die sich einerseits am Klemmteil 31 und andererseits an der Grundkörperpartie 36 abstützt.

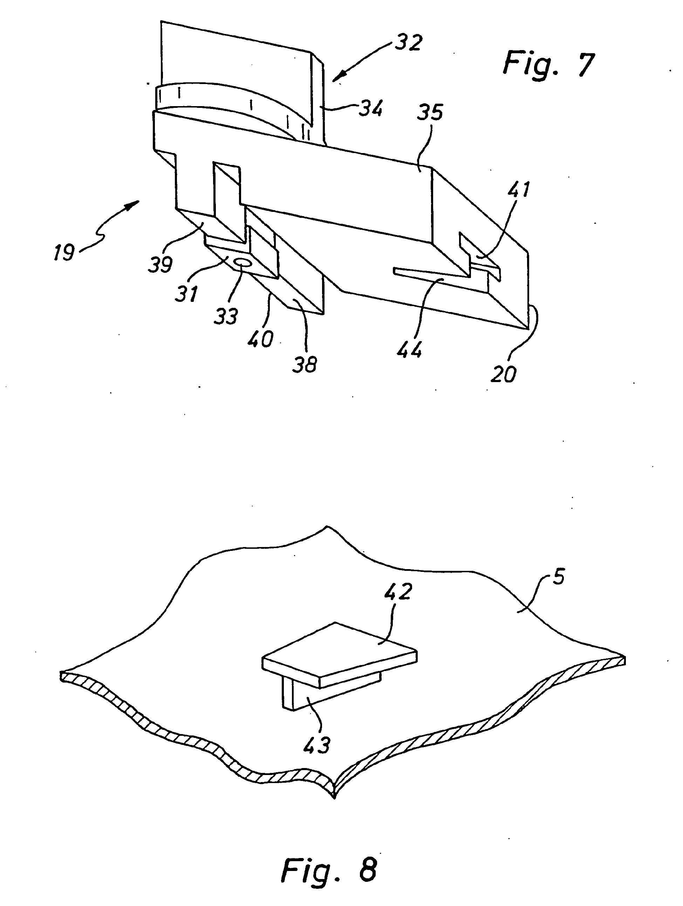

Das Anschlagstück 19 weist schließlich noch eine neben dem Klemmteil 31 feststehend angeordnete, durch den Längsschlitz 27 in die Längsnut 28 eingreifende Führungspartie 38 auf. Die Führungspartie 38 hat leistenartige Gestalt. Sie kann in Längsrichtung, wie aus Fig. 7 hervorgeht, zweigeteilt sein, wobei das Klemmteil 31 zwischen den beiden Bereichen 39,40 der Führungspartie 38 angeordnet ist. Somit lässt sich das Anschlagstück 19 sicher fixieren, sodass es auch großen Kräften in vertikaler Richtung standhält.

Die Längsnut 28 befindet sich beim Ausführungsbeispiel abseits der Führungsrippe 26 im Bereich des beim Gebrauch dem vom Sägeblatt 7 gebildeten Werkzeug entgegengesetzten Längsrand der Führungsschiene 1. Es wäre jedoch auch möglich, die Führungsrippe 26 mit einem dem Längsschlitz 27 entsprechenden Längsschlitz und den Randstegen 29,30 entsprechenden Randstegen zu versehen, sodass man das Anschlagstück 19 an der in dieser Weise modifizierten Führungsrippe festlegen kann.

Bei Nichtgebrauch wird das Anschlagstück 19 von der Führungsschiene 1 weggenommen. Dieses Wegnehmen erfolgt durch Verdrehen des Drehgriffs 34 in Löserichtung, so dass sich das Anschlagstück 19 in Längsrichtung verschieben und an einer der Stirnseiten der Führungsschiene wegnehmen lässt. Damit das weggenommene Anschlagstück 19 nicht verloren geht oder verlegt wird, kann es an der Tragplatte 5 der Tauchsäge 3 werkzeuglos entfernbar befestigt werden. Hierzu kann das Anschlagstück 19 mittels einer Steckeinrichtung an die Tragplatte 5 angesteckt werden. Eine Möglichkeit der Ausbildung der Steckeinrichtung ist aus den Figuren 7 und 8 ersichtlich. Am Anschlagstück 19 ist eine Steckausnehmung 41 angeordnet, die seitlich mündet und von ihrer Mündung aus sich keilartig verjüngend in das Anschlagstück erstreckt. Dieser Steckausnehmung 41 ist ein an der Tragplatte 5 angeordnetes Steckglied 42 zugeordnet, das eine sich entsprechend keilartig verjüngende Gestalt aufweist, so dass das Anschlagstück mit seiner Steckausnehmung 41 auf das Steckglied 42 aufgesteckt werden kann. Das Steckglied 42 wird mittels eines Haltestegs 43 im Abstand zur Tragplatte 5 gehalten. Damit das Anschlagstück 19 auf das Steckglied 42 aufgeschoben werden kann, ist die Steckausnehmung 41 durch einen unterseitigen Aufnahmeschlitz 44 nach unten hin offen, sodass sich zusammen mit der Steckausnehmung 41 ein im wesentlichen T-förmiger Querschnitt ergibt. Beim Aufstecken des Anschlagstücks 19 gelangt der Haltesteg 43 in den Aufnahmeschlitz 44. Durch die Keilgestalt ergibt sich ein klemmender Halt des Anschlagstücks 19.

Die Steckeinrichtung könnte auch umgekehrt so ausgebildet sein, dass die Steckausnehmung an der Tragplatte 5 und das Steckglied am Anschlagstück angeordnet ist.

## Patentansprüche

1. Führungsschiene für Handwerkzeugmaschinen mit zugeordnetem Anschlagstück, wobei die Handwerkzeugmaschine mit einer ihre Unterseite bildenden Tragplatte und das Anschlagstück jeweils mit Führungseingriff auf der Führungsschiene anordenbar und in Längsrichtung der Führungsschiene geführt verschiebbar sind und das Anschlagstück in seiner jeweiligen Längslage an der Führungsschiene fixierbar ist und im fixierten Zustand einen in Längsrichtung wirksamen Längsanschlag für die Handwerkzeugmaschine bildet, **dadurch gekennzeichnet, dass** das Anschlagstück (19) eine im auf der Führungsschiene (1) angeordneten Zustand oberhalb eines in Längsrichtung mindestens an einer Seite offenen Eingreifraums (21) angeordnete Übergreifpartie (22) und die Tragplatte (5) der Handwerkzeugmaschine (2) eine unterhalb der Übergreifpartie (22) in den Eingreifraum (21) passende Untergreifpartie (23) aufweist, wobei die Übergreifpartie (22) und die Untergreifpartie (23) so ausgebildet und angeordnet sind, dass die Untergreifpartie (23) beim Verschieben des Anschlagstücks (19) und/oder der Handwerkzeugmaschine (2) aufeinander zu in den Eingreifraum (21) gelangt und die Übergreifpartie (22) einen nach oben hin wirksamen Höhenanschlag (24) für die Untergreifpartie (23) bildet, und dass der Führungseingriff zwischen dem Anschlagstück (19) und der Führungsschiene (1) das Anschlagstück (19) gegen ein Abheben von der Führungsschiene (1) nach oben hin sichert.

2. Führungsschiene mit zugeordnetem Anschlagstück nach Anspruch 1, **dadurch gekennzeichnet, dass** im auf der Führungsschiene (1) angeordneten Zustand des Anschlagstücks (19) die Übergreifpartie (22) in der Projektion oberhalb der Führungsschiene (1) angeordnet ist.

3. Führungsschiene mit zugeordnetem Anschlagstück nach Anspruch 2, **dadurch gekennzeichnet, dass** der Eingreifraum (21) von dem Zwischenraum zwischen der Führungsschiene (1) und der Übergreifpartie (22) gebildet wird.

4. Führungsschiene mit zugeordnetem Anschlagstück nach einem der Ansprüche 1 bis 3, **dadurch gekennzeichnet, dass** der Eingreifraum (21) in Längsrichtung an einer Seite zum Eingreifen der Untergreifpartie (23) offen und an der entgegengesetzten Seite durch eine den Längsanschlag (20) bildende, der Stirnseite der Untergreifpartie (23) zugeordnete Anschlagfläche (25) begrenzt ist.

5. Führungsschiene mit zugeordnetem Anschlagstück nach einem der Ansprüche 2 bis 4, **dadurch gekennzeichnet, dass** die Übergreifpartie (22) am Anschlagstück (19) in Längsrichtung vorstehend angeordnet ist.

6. Führungsschiene mit zugeordnetem Anschlagstück nach einem der Ansprüche 1 bis 5, **dadurch gekennzeichnet, dass** die Untergreifpartie (23) im Bereich des Umfangs der Tragplatte (5) angeordnet ist.

7. Führungsschiene mit zugeordnetem Anschlagstück nach Anspruch 6, **dadurch gekennzeichnet, dass** die Untergreifpartie (23) am Umfang der Tragplatte (5) in Längsrichtung vorstehend angeordnet ist.

8. Führungsschiene mit zugeordnetem Anschlagstück nach einem der Ansprüche 1 bis 7, **dadurch gekennzeichnet, dass** die Führungsschiene (1) zum Führen und Fixieren des Anschlagstücks (19) eine an der Oberseite durch einen Längsschlitz (27) offene Längsnut (28) aufweist, wobei der Längsschlitz (27) durch aufeinander zu gerichtete Randstege (29,30) begrenzt wird, und dass am Anschlagstück (19) ein in die Längsnut (28) einführbares, im eingeführten Zustand die Randstege (29,30) hintergreifendes und mittels einer Betätigungseinrichtung gegen die Randstege (29,30) spannbares Klemmteil (31) angeordnet ist.

9. Führungsschiene mit zugeordnetem Anschlagstück nach Anspruch 8, **dadurch gekennzeichnet, dass** das Anschlagstück (19) eine in Längsrichtung neben dem Klemmteil (31) feststehend angeordnete, durch den Längsschlitz (27) in die Längsnut (28) eingreifende Führungspartie (38) aufweist.

10. Führungsschiene mit zugeordnetem Anschlagstück nach einem der Ansprüche 1 bis 9, **dadurch gekennzeichnet, dass** das Anschlagstück (19) bei Nichtgebrauch werkzeuglos entfernbar an der Tragplatte (5) befestigbar ist.

11. Führungsschiene mit zugeordnetem Anschlagstück nach Anspruch 10, **dadurch gekennzeichnet, dass** das Anschlagstück (19) mittels einer Steckeinrichtung an die Tragplatte (5) ansteckbar ist.

12. Führungsschiene mit zugeordnetem Anschlagstück nach Anspruch 11, **dadurch gekennzeichnet, dass** die Steckeinrichtung eine sich von ihrer Mündung aus keilartig verjüngende Steckausnehmung (41) am Anschlagstück (19) oder an der Tragplatte und ein an der Tragplatte (5) bzw. am Anschlagstück angeordnetes Steckglied (42) mit sich entsprechend keilartig verjüngender Gestalt aufweist.

## Claims

1. Guide rail for hand-operated machine tools, wherein the hand-operated machine tool is locatable on the guide rail by a base plate representing its underside and the stop element is locatable with guiding engagement, both parts being guided for movement in the longitudinal direction of the guide rail and the stop element being lockable on the guide rail in its current longitudinal position to form a longitudinal stop effective in the longitudinal direction for the hand-operated machine tool in its locked state, **characterised in that** the stop element (19) has an overlapping section (22) located above an engagement space (21) open on at least one side in the longitudinal direction when located on the guide rail (1), and **in that** the base plate (5) of the hand-operated machine tool (2) has an undercut section (23) fitting into the engagement space (21) below the overlapping section (22), the overlapping section (22) and the undercut section (23) being so designed and arranged that the undercut section (23) enters the engagement space (21) when the stop element (19) and/or the hand-operated machine tool (2) are moved towards one another, while the overlapping section (22) forms a vertical stop (24) effective in the upward direction for the undercut section (23), and **in that** the guiding engagement between the stop element (19) and the guide rail (1) secures the stop element (19) against being lifted off the guide rail (1) in the upward direction.

2. Guide rail with associated stop element according to claim 1, **characterised in that** the overlapping section (22) is located in the projection above the guide rail (1) when the stop element (19) is located on the guide rail (1).

3. Guide rail with associated stop element according to claim 2, **characterised in that** the engagement space (21) is represented by the gap between the guide rail (1) and the overlapping section (22).

4. Guide rail with associated stop element according to any of claims 1 to 3, **characterised in that** the engagement space (21) is open on one side in the longitudinal direction for engaging the undercut section (23) while being bounded on the opposite side by a stop face (25) representing the longitudinal stop (20) and assigned to the end face of the undercut section (23).

5. Guide rail with associated stop element according to any of claims 2 to 4, **characterised in that** the overlapping section (22) is arranged on the stop element (19) to project in the longitudinal direction.

6. Guide rail with associated stop element according to any of claims 1 to 5, **characterised in that** the undercut section (23) is located in the area of the circumference of the base plate (5).

7. Guide rail with associated stop element according to claim 6, **characterised in that** the undercut section (23) is arranged on the circumference of the base plate (5) to project in the longitudinal direction.

8. Guide rail with associated stop element according to any of claims 1 to 7, **characterised in that** the guide rail (1) has a longitudinal groove (28) open on the top through a longitudinal slot (27) for the guidance and location of the stop element (19), said longitudinal slot (27) being bounded by edge webs (29, 30) facing one another, and **in that** the stop element (19) supports a clamping element (31) insertable into the longitudinal groove (28), engaging the edge webs (29, 30) from behind in the inserted state and capable of being clamped against the edge webs (29, 30) by means of an actuating mechanism.

9. Guide rail with associated stop element according to claim 8, **characterised in that** the stop element (19) incorporates a guide section (38) located adjacent to the clamping element (31) in the longitudinal direction and engaging the longitudinal groove (28) through the longitudinal slot (27).

10. Guide rail with associated stop element according to any of claims 1 to 9, **characterised in that** the stop element (19) can be attached to the base plate (5) and removed therefrom without using any tools when not in use.

11. Guide rail with associated stop element according to claim 10, **characterised in that** the stop element (19) can be attached to the base plate (5) by means of an inserting device.

12. Guide rail with associated stop element according to claim 11, **characterised in that** the inserting device comprises an inserting recess (41) tapering conically from its mouth and located on the stop element (19) or on the base plate and an inserting element (42) of a corresponding tapering shape located on the base plate (5) or on the stop element.

## Revendications

1. Rail de guidage pour machine-outil portative avec élément de butée associé, la machine-outil portative, munie d'une plaque de support formant sa face inférieure, et l'élément de butée pouvant être agencés chacun par engrènement sur le rail de guidage et étant montés mobiles dans le sens longitudinal du rail de guidage, et l'élément de butée pouvant être bloqué dans sa position longitudinale respective sur le rail de guidage et formant dans la position bloquée une butée longitudinale active dans le sens longitudinal pour la machine-outil portative, **caractérisé en ce que** l'élément de butée (19) comporte une partie de recouvrement supérieur (22) qui, dans la position montée sur le rail de guidage (1), est disposée au-dessus d'un espace d'engrènement (21) ouvert dans le sens longitudinal au moins sur un côté, et la plaque de support (5) de la machine-outil portative (2) comporte une partie de recouvrement inférieur (23), disposée au-dessous de la partie de recouvrement supérieur (22) dans l'espace d'engrènement (21), la partie de recouvrement supérieur (22) et la partie de recouvrement inférieur (23) étant conçues et agencées de telle sorte que, lorsque la butée (19) et/ou la machine-outil portative (2) se déplacent l'une vers l'autre, la partie de recouvrement inférieur (23) parvient dans l'espace d'engrènement (21) et la partie de recouvrement supérieur (22) forme une butée verticale (24) active vers le haut pour la partie de recouvrement inférieur (23), et **en ce que** l'engrènement entre l'élément de butée (19) et le rail de guidage (1) bloque l'élément de butée (19) pour l'empêcher de se soulever vers le haut sur le rail de guidage (1).

2. Rail de guidage avec élément de butée associé selon la revendication 1, **caractérisé en ce que**, lorsque l'élément de butée (19) est en position montée sur le rail de guidage (1), la partie de recouvrement supérieur (22) est agencée dans la projection au-dessus du rail de guidage (1).

3. Rail de guidage avec élément de butée associé selon la revendication 2, **caractérisé en ce que** l'espace d'engrènement (21) est formé par l'intervalle entre le rail de guidage (1) et la partie de recouvrement supérieur (22).

4. Rail de guidage avec élément de butée associé selon l'une quelconque des revendications 1 à 3, **caractérisé en ce que** l'espace d'engrènement (21) est ouvert dans le sens longitudinal sur un côté pour l'engrènement de la partie de recouvrement inférieur (23) et est limité sur le côté opposé par une surface de butée (25) formant la butée longitudinale (20) et associée à la face frontale de la partie de recouvrement inférieur (23).

5. Rail de guidage avec élément de butée associé selon l'une quelconque des revendications 2 à 4, **caractérisé en ce que** la partie de recouvrement supérieur (22) est agencée en saillie dans le sens longitudinal sur l'élément de butée (19).

6. Rail de guidage avec élément de butée associé selon l'une quelconque des revendications 1 à 5, **caractérisé en ce que** la partie de recouvrement inférieur (23) est agencée dans la zone de la surface périphérique de la plaque de support (5).

7. Rail de guidage avec élément de butée associé selon la revendication 6, **caractérisé en ce que** la partie de recouvrement inférieure (23) est agencée en saillie dans le sens longitudinal sur la surface périphérique de la plaque de support (5).

8. Rail de guidage avec élément de butée associé selon l'une quelconque des revendications 1 à 7, **caractérisé en ce que** le rail de guidage (1), pour guider et bloquer l'élément de butée (19), comporte une rainure longitudinale (28) ouverte sur le côté supérieur par une fente longitudinale (27), la fente longitudinale (27) étant limitée par des rebords (29, 30) orientés l'un vers l'autre, et **en ce que** sur l'élément de butée (19) est agencé un élément de serrage (31) pouvant être introduit dans la rainure longitudinale (28), s'engageant derrière les rebords (29, 30) dans la position introduite et pouvant être serré contre les rebords (29, 30) au moyen d'un dispositif de manoeuvre.

9. Rail de guidage avec élément de butée associé selon la revendication 8, **caractérisé en ce que** l'élément de butée (19) comporte une partie de guidage (38) montée fixe dans le sens longitudinal à côté de l'élément de serrage (31) et s'engageant à travers la fente longitudinale (27) dans la rainure longitudinale (28).

10. Rail de guidage avec élément de butée associé selon l'une quelconque des revendications 1 à 9, **caractérisé en ce que** l'élément de butée (19), en cas de non-utilisation, peut être fixé sans l'outil de manière amovible contre la plaque de support (5).

11. Rail de guidage avec élément de butée associé selon la revendication 10, **caractérisé en ce que** l'élément de butée (19) peut être fixé au moyen d'un dispositif d'enfichage sur la plaque de support (5).

12. Rail de guidage avec élément de butée associé selon la revendication 11, **caractérisé en ce que** le système d'enfichage comporte un évidement de réception (41), se rétrécissant en cône à partir de son embouchure, sur l'élément de butée (19) ou sur la plaque de support et un organe à enficher (42), avec une forme se rétrécissant en cône de manière correspondante, agencé sur la plaque de support (5) ou sur l'élément de butée.
